# NEUE EUROPÄISCHE PATENTSCHRIFT

(11) **EP 1 604 750 B2**
(45) Veröffentlichungstag und Bekanntmachung des Hinweises auf die Entscheidung über den Einspruch: **21.12.2011**
(45) Hinweis auf die Patenterteilung: 26.07.2006
(21) Anmeldenummer: 05009996.9
(22) Anmeldetag: 07.05.2005
(51) Int. Cl.: B21B 38/06, G01L 5/04

(54) **Einrichtung zur Messung der Zugspannungsverteilung in bandförmigem Walzgut aus Metall**
Device for measuring tensile stress distribution in metal strip
Dispositif pour mesurer la distribution de la tension dans une bande métallique

(30) Priorität: 08.06.2004 DE 202004009076 U
(43) Veröffentlichungstag der Anmeldung: 14.12.2005
(73) Patentinhaber: ACHENBACH BUSCHHÜTTEN GmbH, 57223 Kreuztal (DE)
(72) Erfinder: Barten, Axel, Dipl.-Ing., 57078 Siegen (DE); Stahl, Werner, Ing., 57223 Kreuztal (DE); Schröder, Heinz-Dieter, Dipl.-Ing., 57250 Netphen (DE)
(74) Vertreter: advotec.

(56) Entgegenhaltungen:
- EP-A- 0 924 960
- EP-A- 0 991 184
- EP-A1- 0 335 468
- WO-A-98/38482
- DE-A1- 2 344 170
- DE-A1- 19 707 691
- DE-A1- 19 803 260
- DE-A1- 19 911 548
- DE-C2- 19 725 726
- US-A- 3 921 425
- US-A1- 2001 019 617
- "NON-CONTACT MEASUREMENT OF STRIP FLATNESS" STEEL TIMES INTERNATIONAL.(INC. STEEL TIMES), DMG WORLD MEDIA, REDHILL, SURREY, GB, Bd. 27, Nr. 5, Juli 2003 (2003-07), Seiten 16-17, XP001185774 ISSN: 0143-7798

## Beschreibung

Die Erfindung betrifft eine Einrichtung zur Messung der Zugspannungsverteilung in bandförmigem Walzgut aus Metall, insbesondere für Kaltwalzwerke zur Herstellung von Fein- und Folienband, wobei das Metallband durch eine berührungslose Krafteinwirkung periodisch ausgelenkt und die Auslenkung gemessen und zur Berechnung der Zugspannungsverteilung über die Breite des Metallbandes verwendet wird.

Die Zugspannungsverteilung über die Bandbreite dient beim Walzen von Metallbändern, insbesondere von Fein- und Folienbandmaterial, als Regelgröße für die Regelung der Bandplanheit.

Eine in der DE 197 07 691 A1 beschriebene gattungsgemäße Einrichtung zur Messung der Zugspannungsverteilung über die Breite eines Metallbandes zwischen zwei Walzgerüsten oder zwischen einem Walzgerüst und einem Aufwickelhaspel weist einen Elektromagneten und einen Abstandsensor auf. Mittels des Elektromagneten wird ein elektromagnetisches Feld erzeugt, das eine Kraft auf das Metallband zur Auslenkung desselben ausübt. Die Auslenkung des Metallbandes wird mittels des Abstandssensors gemessen und zur Berechnung der Zugspannungsverteilung über die Breite des Metallbandes verwendet. Zur Vermeidung von die Abstandsmessungen beeinträchtigenden Überlagerungen der im Metallband zur Auslenkung desselben erzeugten Biegewelle mit reflektierten Biegewellen wird die Biegewelle im Metallband in einem bestimmten Abstand von dem Erregermagneten durch ein weiteres elektromagnetisches Wechselfeld gedämpft.

Bei einer aus der WO 98/38482 bekannten gattungsgemäßen Meßeinrichtung wird das Metallband mit Hilfe einer periodisch arbeitenden Saugvorrichtung ausgelenkt, die die Unterseite des Metallbandes ansaugt. Bei einer weiteren in der WO 98/38482 beschriebenen gattungsgemäßen Meßeinrichtung, die das Prinzip des hydrodynamischen Paradoxons nutzt, wird mittels einer Saugvorrichtung Luft gegen die Bandunterseite geblasen. Durch die hohe Bandlaufgeschwindigkeit wird die Luft auf der Bandunterseite vom Band mitgerissen, so daß ein Unterdruck unter dem Band entsteht und es aufgrund des auf die Bandoberseite wirkenden atmosphärischen Drucks zum Ansaugen des Bandes in Richtung auf einen Leittisch kommt, in den die Saugvorrichtung sowie Abstandssensoren zur Messung der Auslenkung des Metallbandes eingebaut sind.

Der bei der Meßeinrichtung nach der WO 98/38482 genutzte Effekt des hydrodynamischen Paradoxons zum Ansaugen des Metallbandes in Richtung auf den Leittisch verhindert beim Einsatz in Feinband- und Folienwalzwerken die Ermittlung von präzisen Meßsignalen.

Der Erfindung liegt die Aufgabe zugrunde, eine Einrichtung zur Messung der Zugspannungsverteilung in einem Walzband aus Metall zu entwickeln, die optimale Ausgangsbedingungen für eine präzise Bestimmung der Zugspannungsverteilung in dem Walzband, insbesondere Fein- und Folienband über die Bandbreite liefert.

Diese Aufgabe wird erfindungsgemäß gelöst durch eine Meßeinrichtung gemäß dem Patentanspruch.

Der Erfindungsgedanke beruht darauf, zur Messung der Zugspannungsverteilung in einem Walzband aus Metall, insbesondere in Fein- und Folienbändern, durch ein unterhalb der Bandlaufebene angeordnetes, motorisch angetriebenes Schwingelement, das als Schwingtisch ausgebildet ist, ein stabilisiertes, periodisch schwingendes zwischen dem Schwingtisch und dem Walzband ausgebildeten, Luftpolster zu erzeugen, das auf die Unterseite des Walzbandes wirkt und dieses periodisch auslenkt, und die Auslenkung des Bandes über die Bandbreite zu messen und zur Berechnung der Zugspannungsverteilung im Walzband über die Bandbreite zu verwenden.

Die Erfindung ist nachstehend anhand von schematischen Zeichnungsfiguren erläutert, die verschiedene Ausführungsformen von Einrichtungen zur Messung der Zugspannungsverteilung in einem Walzband darstellen.

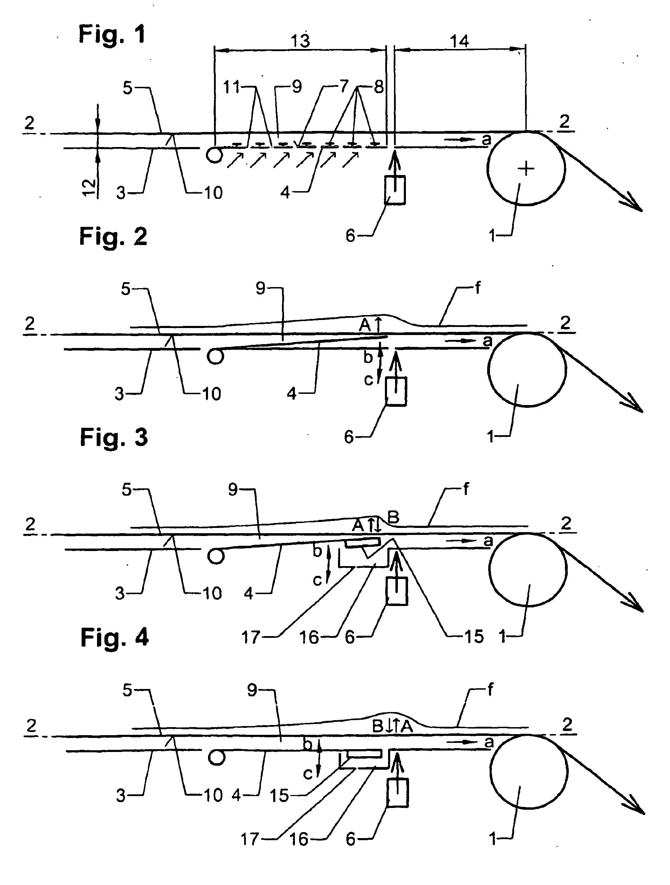

Die Meßeinrichtung gemäß den Fign. 1 und 2, die zwischen einem nicht dargestellten Walzgerüst und einer Umlenkrolle 1 angeordnet ist, umfaßt einen unterhalb der Bandlaufebene 2-2 fest eingebauten Leittisch 3, einen in den Leittisch integrierten, motorisch angetriebenen Schwingtisch 4 sowie einen in Laufrichtung a eines Walzbandes 5 aus Metall hinter dem Schwingtisch 4 in den Leittisch eingebauten Abstandssensor 6.

Die Oberseite 7 des Schwingtisches 4 ist zur Vermeidung des Auftretens des vorstehend erläuterten hydrodynamischen Paradoxon Effektes mit einer Turbulenzen erzeugenden Oberflächenstruktur 8 versehen.

Durch den periodisch angetriebenen Schwingtisch 4, der eine Schwenkbewegung b, c senkrecht zur Bandlaufebene 2-2 in Bandlaufrichtung a ausführt, wird ein stabilisiertes, periodisch schwingendes Luftpolster 9 erzeugt, das mit einer aufwärts gerichteten Vertikalkraftkomponente A auf die Unterseite 10 des Walzbandes 5 wirkt und dieses periodisch auslenkt.

Fig. 2 zeigt den Schwingtisch 4 in angehobener Stellung mit der Funktionslinie f des durch die Vertikalkraftkomponente A des Luftpolsters 9 ausgelenkten Walzbandes 5.

Die Auslenkung des Walzbandes 5 wird durch den Abstandssensor 6 gemessen und zur Berechnung der Zugspannungsverteilung über die Breite des Walzbandes verwendet.

Der Schwingtisch 4 ist mit Luftaustrittsöffnungen 11 versehen, um das Luftpolster 9 zu stabilisieren und bei niedrigen Bandlaufgeschwindigkeiten die Ausbildung eines Luftpolsters zwischen dem Schwingtisch 4 und dem Walzband 5 zu gewährleisten.

Die regelbare Frequenz des Schwingtisches 4 ist in Abhängigkeit von der zur Messung der Auslenkung des Walzbandes erforderlichen Frequenz zwischen 5 und 40 Hertz einstellbar.

Der Schwingtisch 4 kann mit einem elektromotorischen, pneumatischen oder hydraulischen Antrieb ausgerüstet sein.

Der Vertikalhub des Schwingtisches 4 ist in einem Bereich von 2 Millimeter bis zum 0,8 fachen Abstand 12 des Schwingtisches von der Bandlaufebene 2-2 einstellbar, wobei der Abstand des Schwingtisches von der Bandlaufebene in einem Bereich zwischen 5 und 20 Millimeter liegt.

Der Schwingtisch 4 besitzt eine Länge 13 von einem Fünftel der einfachen nutzbaren Breite des Walzbandes 5 bis zu einer einfachen Bandbreite in Bandlaufrichtung a. Der Abstand 14 zwischen der Umlenkrolle 1 und dem Abstandssensor 6 hängt von der Art des zum Einsatz kommenden Abstandssensors ab, der z.B. als Wirbelstromsensor, kapazitiver Abstandssensor, optischer Wegsensor oder Ultraschallabstandssensor ausgebildet sein kann.

Der in den Fign. 3 und 4 dargestellte Schwingtisch 4 ist zur vorteilhaften Verstärkung und Stabilisierung der Auslenkung mit einem Verdrängerelement 15 ausgestattet, das mit einer in den Leittisch 3 eingebauten, offenen Luftkammer 16 zusammenwirkt zur Erzeugung einer auf die Unterseite 10 des Walzbandes 5 wirkenden, abwärts gerichteten Vertikalkraftkomponente bzw. Saugkraftkomponente B beim Aufwärtshub b des Schwingtisches 4 zum Anheben des Walzbandes 5 mittels des zwischen diesem und dem Schwingtisch 4 gebildeten Luftpolsters 9 (Fig. 3) und zur Erzeugung einer auf die Bandunterseite 10 wirkenden, aufwärts gerichteten Vertikalkraftkomponente A beim Abwärtshub c des Schwingtisches 4 zum Absenken des Walzbandes 5 mittels des Luftpolsters 9 (Fig. 4). Die Luftkammer 16 ist mit einer Bypaßöffnung 17 zur Steuerung der auf die Bandunterseite 10 wirkenden Vertikalkraftkomponenten A, B ausgestattet. Durch diese Ausgestaltung der Meßeinrichtung ist die Charakteristik der Auslenkung des Walzbandes veränderbar.

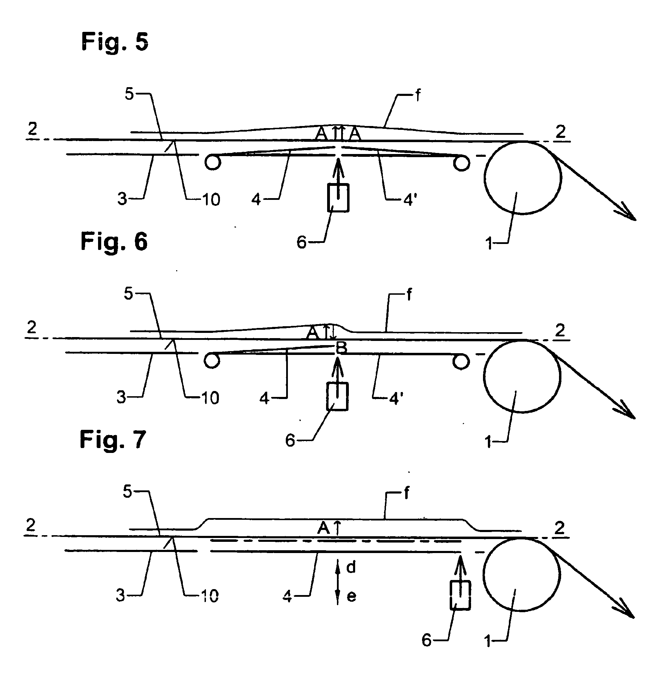

Fig. 5 zeigt eine weitere Ausführungsform der Meßeinrichtung mit zwei im Gleichlauf betriebenen Schwingtischen 4, 4' mit den Vertikalkraftkomponenten A, A und Fig. 6 veranschaulicht eine Ausführungsform der Meßeinrichtung mit zwei im Gegenlauf betriebenen Schwingtischen 4, 4' mit den Vertikalkraftkomponenten A und B.

Die Meßeinrichtung gemäß Fig. 7 ist mit einem Schwingtisch 4 ausgestattet, der eine lineare Schwingbewegung d, e senkrecht zur Bandlaufebene 2-2 ausführt.

Bei zwei weiteren Ausführungsformen der gattungsgemäßen Meßeinrichtung erfolgt die Auslenkung des Walzbandes durch Membran-Schallwellenerzeuger in Biegewellenwandler-Technologie und/oder durch Schallwellenerzeuger nach dem Prinzip einer linearen Klangfeldsynthese, wobei die Schallwellenerzeuger in einen Leittisch integriert sind.

## Patentansprüche

1. Einrichtung zur Messung der Zugspannungsverteilung in bandförmigem Walzgut aus Metall, insbesondere für Kaltwalzwerke zur Herstellung von Fein- und Folienband, wobei das Metallband durch eine berührungslose Krafteinwirkung periodisch ausgelenkt und die Auslenkung gemessen und zur Berechnung der Zugspannungsverteilung über die Breite des Metallbandes verwendet wird, **gekennzeichnet durch** mindestens einen unterhalb der Bandlaufebene (2-2) angeordneten, motorisch angetriebenen Schwingtisch zur Erzeugung eines stabilisierten, periodisch schwingenden zwischen dem Schwingtisch und dem Walzband ausgebildeten, Luftpolsters (9), das auf die Unterseite (10) des Walzbandes (5) wirkt.

2. Einrichtung nach Anspruch 1, **dadurch gekennzeichnet, daß** der Schwingtisch (4) eine Schwenkbewegung (b, c) senkrecht zur Bandlaufebene (2-2) in Bandlaufrichtung (a) ausführt.

3. Einrichtung nach Anspruch 1, **dadurch gekennzeichnet, daß** der Schwingtisch (4) eine lineare Schwingbewegung (d, e) senkrecht zur Bandlaufebene (2-2) ausführt.

4. Einrichtung nach einem der Ansprüche 1 bis 3, **dadurch gekennzeichnet, daß** die Oberseite (7) des Schwingtisches (4) mit Oberflächenstrukturen (8) zur Erzeugung von Luftturbulenzen versehen ist.

5. Einrichtung nach einem der Ansprüche 1 bis 4, **dadurch gekennzeichnet, daß** der Schwingtisch (4) Luftaustrittsöffnungen (11) aufweist.

6. Einrichtung nach einem der Ansprüche 1 bis 5, **gekennzeichnet durch** ein an dem Schwingtisch (4) angeordnetes Verdrängerelement (15), das mit einer in den Leittisch (3) eingebauten, offenen Luftkammer (16) zusammenwirkt zur Erzeugung einer auf die Bandunterseite (10) wirkenden, abwärts gerichteten Vertikalkraftkomponente (B) beim Aufwärtshub (b) des Schwingtisches (4) zum Anheben des Walzbandes (5) mittels des zwischen diesem und dem Schwingtisch (4) gebildeten Luftpolsters (9) und zur Erzeugung einer auf die Bandunterseite (10) wirkenden, aufwärts gerichteten Vertikalkraftkomponente (A) beim Abwärtshub (c) des Schwingtisches (4) zum Absenken des Walzbandes (5) mittels des Luftpolsters (9) im Hinblick auf eine Verstärkung und eine Stabilisierung der Auslenkung des Walzbandes (5).

7. Einrichtung nach Anspruch 6, **dadurch gekennzeichnet, daß** die Luftkammer (16) zur Steuerung der auf die Bandunterseite (10) wirkenden Vertikalkraftkomponenten (A, B) mit mindestens einer Bypaßöffnung (17) ausgestattet ist.

8. Einrichtung nach einem der Ansprüche 1 bis 7, **gekennzeichnet durch** eine Frequenz des Schwingtisches (4) zwischen 5 und 40 Hertz.

9. Einrichtung nach Anspruch 8, **dadurch gekennzeichnet, daß** die Frequenz des Schwingtisches (4) regelbar ist.

10. Einrichtung nach einem der Ansprüche 1 bis 9, **gekennzeichnet durch** einen elektromotorischen, pneumatischen oder hydraulischen Antrieb des Schwingtisches (4).

11. Einrichtung nach einem der Ansprüche 1 bis 10, **gekennzeichnet durch** eine Einstellbarkeit des Vertikalhubes des Schwingtisches (4) in einem Bereich von 2 Millimeter bis zum 0,8fachen Abstand (12) des Schwingtisches (4) von der Bandlaufebene (2-2).

12. Einrichtung nach Anspruch 11, **dadurch gekennzeichnet, daß** der Abstand (12) zwischen dem Schwingtisch (4) und der Bandlaufebene (2-2) in einem Bereich zwischen 5 und 20 Millimeter liegt.

13. Einrichtung nach einem der Ansprüche 1 bis 12, **dadurch gekennzeichnet, daß** der Schwingtisch (4) eine Länge (13) von einem Fünftel der einfachen nutzbaren Breite des Walzbandes (5) bis zu einer einfachen Bandbreite in Bandlaufrichtung (a) aufweist.

14. Einrichtung nach einem der Ansprüche 1 bis 13, **gekennzeichnet durch** zwei im Gleichlauf betriebene Schwingtische (4, 4').

15. Einrichtung nach einem der Ansprüche 1 bis 13, **gekennzeichnet durch** zwei gegenläufig betriebene Schwingtische (4, 4').

16. Einrichtung nach einem der Ansprüche 1 bis 15, **gekennzeichnet durch** den Einbau eines Schwingtisches (4) bzw. von zwei Schwingtischen (4, 4') in einen Leittisch (3).

## Claims

1. A device for measuring the tensile stress distribution in rolled metal strip, particularly for cold rolling mills for producing fine strip and foil strip, with the metal strip being periodically deflected by means of a contactless force effect and the deflection being measured and used for calculating the tensile stress distribution over the width of the metal strip, **characterized by** at least one motor-driven oscillating table that is arranged underneath the strip running plane (2-2) and serves for producing a stabilized, periodically oscillating air cushion (9) that is realized between the oscillating table and the rolled strip and acts upon the underside (10) of the rolled strip (5).

2. The device according to Claim 1, **characterized in that** the oscillating table (4) carries out a pivoting movement (b, c) perpendicular to the strip running plane (2-2) in the strip running direction (a).

3. The device according to Claim 1, **characterized in that** the oscillating table (4) carries out a linear oscillating movement (d, e) perpendicular to the strip running plane (2-2).

4. The device according to one of Claims 1 to 3, **characterized in that** the upper side (7) of the oscillating table (4) is provided with surface structures (8) for producing air turbulences.

5. The device according to one of Claims 1 to 4, **characterized in that** the oscillating table (4) features air outlet openings (11).

6. The device according to one of Claims 1 to 5, **characterized by** a displacement element (15) that is arranged on the oscillating table (4) and cooperates with an open air chamber (16) incorporated into the guide table (3) in order to produce a vertical force component (B) that acts upon the strip underside (10) and is directed downward during the upward stroke (b) of the oscillating table (4) so as to raise the rolled strip (5) by means of the air cushion (9) formed between the rolled strip and the oscillating table (4), as well as to produce a vertical force component (A) that acts upon the strip underside (10) and is directed upward during the downward stroke (c) of the oscillating table (4) so as to lower the rolled strip (5) by means of the air cushion (9) with respect to a reinforcement and a stabilization of the deflection of the rolled strip (5).

7. The device according to Claim 6, **characterized in that** the air chamber (16) for controlling the vertical force components (A, B) acting upon the strip underside (10) is realized with at least one bypass opening (17).

8. The device according to one of Claims 1 to 7, **characterized by** a frequency of the oscillating table (4) between 5 and 40 hertz.

9. The device according to Claim 8, **characterized in that** the frequency of the oscillating table (4) can be controlled.

10. The device according to one of Claims 1 to 9, **characterized by** an electromotive, pneumatic or hydraulic drive of the oscillating table (4).

11. The device according to one of Claims 1 to 10, **characterized in that** the vertical stroke of the oscillating table (4) can be adjusted in a range between 2 millimeters and 0.8-times the spacing (12) of the oscillating table (4) from the strip running plane (2-2).

12. The device according to Claim 11, **characterized in that** the spacing (12) between the oscillating table (4) and the strip running plane (2-2) lies in a range between 5 and 20 millimeters.

13. The device according to one of Claims 1 to 12, **characterized in that** the oscillating table (4) has a length (13) between one-fifth of the single usable width of the rolled strip (5) and one single strip width in the strip running direction (a).

14. The device according to one of Claims 1 to 13, **characterized by** two oscillating tables (4, 4') that are operated in parallel.

15. The device according to one of Claims 1 to 13, **characterized by** two oscillating tables (4, 4') that are operated in opposite directions.

16. The device according to one of Claims 1 to 15, **characterized by** the installation of an oscillating table (4) or of two oscillating tables (4, 4') into a guide table (3).

## Revendications

1. Dispositif de mesure de la répartition de l'effort de traction dans un produit laminé sous forme de feuillard en métal, notamment pour des laminoirs à froid de production de feuillard fin et de feuillard en feuille, le feuillard métallique étant dévié périodiquement par l'action d'une force sans contact et la déviation étant mesurée et utilisée pour calculer la répartition de l'effort de traction sur la largeur du feuillard métallique, **caractérisé par** au moins une table oscillante qui est disposée en dessous du plan (2-2) de passage du feuillard, qui est entraînée par moteur et qui est destinée à produire un coussin (9) d'air stabilisé, créé entre la table oscillante et le feuillard laminé, oscillant périodiquement qui agit sur la face (10) inférieure du feuillard (5) laminé.

2. Dispositif selon la revendication 1, **caractérisé en ce que** la table oscillante (4) exécute un mouvement (b, c) de pivotement à la perpendiculaire du plan (2-2) de passage du feuillard dans la direction (a) de passage du feuillard.

3. Dispositif selon la revendication 1, **caractérisé en ce que** la table oscillante (4) exécute un mouvement (d, e) oscillant linéaire, à la perpendiculaire du plan (2-2) de passage du feuillard.

4. Dispositif selon l'une quelconque des revendications 1 à 3, **caractérisé en ce que** la face supérieure (7) de la table (4) oscillante est munie de structures superficielles (8) pour la production de turbulences d'air.

5. Dispositif selon l'une quelconque des revendications 1 à 4, **caractérisé en ce que** la table oscillante (4) comporte des orifices (11) de sortie d'air.

6. Dispositif selon l'une quelconque des revendications 1 à 5, **caractérisé par** un élément de refoulement (15) qui est monté sur la table oscillante (4), qui coopère avec une chambre d'air (16) ouverte et incorporée dans la table de guidage (3) pour produire une composante (B) de force verticale dirigée vers le bas et agissant sur la face inférieure (10) du feuillard lors de la levée (b) de la table oscillante (4) pour soulever le feuillard (5) laminé au moyen du coussin d'air (9) crée entre celui-ci et la table oscillante (4) et pour produire une composante (A) de force verticale dirigée vers le haut et agissant sur la face inférieure (10) du feuillard lors de la descente (c) de la table oscillante (4) pour abaisser le feuillard (5) laminé au moyen du coussin d'air (9), en vue de renforcer et de stabiliser la déviation du feuillard (5) laminé.

7. Dispositif selon la revendication 6, **caractérisé en ce que** pour régler les composantes (A, B) de force verticale agissant sur la face (10) inférieure du feuillard, la chambre d'air (16) est équipée d'au moins un orifice de dérivation (17).

8. Dispositif selon l'une quelconque des revendications 1 à 7, **caractérisé par** une fréquence de la table oscillante (4) comprise entre 5 et 40 Hertz.

9. Dispositif selon la revendication 8, **caractérisé en ce que** la fréquence de la table oscillante (4) est réglable.

10. Dispositif selon l'une quelconque des revendications 1 à 9, **caractérisé par** un entraînement par moteur électrique, pneumatique ou hydraulique de la table oscillante (4).

11. Dispositif selon l'une quelconque des revendications 1 à 10, **caractérisé par** une possibilité de réglage de la course verticale de la table oscillante (4) dans une plage de 2 mm jusqu'à 0,8 fois la distance (12) entre la table oscillante (4) et le plan (2-2) de passage du feuillard.

12. Dispositif selon la revendication 11, **caractérisé en ce que** la distance (12) entre la table oscillante (4) et le plan (2-2) de passage du feuillard se situe dans une plage comprise entre 5 et 20 millimètres.

13. Dispositif selon l'une quelconque des revendications 1 à 12, **caractérisé en ce que** la table oscillante (4) présente une longueur (13) correspondant à de un cinquième de la largeur utile simple du feuillard (5) laminé jusqu'à une largeur de feuillard simple dans la direction (a) de passage du feuillard.

14. Dispositif selon l'une quelconque des revendications 1 à 13, **caractérisé par** deux tables oscillantes (4,4') fonctionnant en synchronisme.

15. Dispositif selon l'une quelconque des revendications 1 à 13, **caractérisé par** deux tables oscillantes (4, 4') fonctionnant en sens opposé.

16. Dispositif selon l'une quelconque des revendications 1 à 15, **caractérisé par** l'incorporation d'une table oscillante (4) ou de deux tables oscillantes (4,4') dans une table de guidage (3).
